# EUROPÄISCHE PATENTANMELDUNG

(11) **EP 1 354 694 A2**
(43) Veröffentlichungstag der Anmeldung: **22.10.2003**
(21) Anmeldenummer: 03007215.1
(22) Anmeldetag: 31.03.2003
(51) Int. Cl.: B30B 1/18

(54) **Verfahren und Vorrichtung zum Überwachen einer Bremse an einer Spindel**

(30) Priorität: 18.04.2002 DE 10217449; 06.09.2002 DE 10241909
(71) Anmelder: BALTEC MASCHINENBAU AG, CH-8330 Pfäffikon-Zürich (CH)
(72) Erfinder: Bollharder, Heinz, 5312 Döttingen (CH); Maschek, Martin, 5436 Würenlos (CH)
(74) Vertreter: Weiss, Peter, Dr.

(57) **Zusammenfassung**

Bei einem Verfahren zum Überwachen einer Bremse (6) an einer Spindel (1), welche von einem Motor (5) angetrieben wird, soll die Spindel (1) mittels des Motors (5) in Betrieb gesetzt und sodann die Bremse (6) betätigt und dabei eine Änderung der Leistungsaufnahme des Motors (5) ermittelt werden.

## Beschreibung

Die Erfindung betrifft ein Verfahren zum Überwachen einer Bremse an einer Spindel, welche von einem Motor angetrieben wird, sowie eine entsprechende Vorrichtung hierfür.

Bekannt ist, dass Arbeitselemente über eine Spindel betätigt werden, wobei der Spindelantrieb beispielsweise über einen Elektromotor erfolgt. Nur beispielhaft wird hier der Antrieb eines Pressenstössels erwähnt.

Bei derartigen Vorrichtungen ist es notwendig und in entsprechenden Verordnungen vorgeschrieben, dass bei einem Not-Halt die Spindel sofort festgelegt werden muss, um beispielsweise einer Verletzungsgefahr vorzubeugen. Für die Erzielung des Not-Halts werden bei Pressen als mechanische Bremsen baumustergeprüfte Komponenten verwendet, welche keine hubzyklische Überwachung benötigen. Diese haben meist einen hydraulischen oder pneumatischen Antrieb. Bei nichtbaumustergeprüften Bremsen ist dagegen eine hubzyklische Überwachung notwendig. Dies bedeutet wiederum, dass die Funktionsfähigkeit der Bremse ständig überwacht werden muss.

Der vorliegenden Erfindung liegt die Aufgabe zugrunde, ein Verfahren und eine Vorrichtung der o.g. Art zu entwickeln, mit denen auf einfache Art und Weise eine Überwachung der Bremse an einer Spindel erfolgt.

Zur Lösung dieser Aufgabe führt, dass die Spindel mittels des Motors in Betrieb gesetzt und sodann die Bremse betätigt und dabei eine Änderung der Leistungsaufnahme des Motors ermittelt wird.

Eine funktionstüchtige elektromechanische Bremse erzeugt während eines Bremsvorgangs ein Bremsmoment. Wird nun bei einer geschwindigkeitsgeregelten Fahrt, beispielsweise eines Pressenstössels, die Bremse zugeschaltet, so muss der Motorstrom entsprechend der Bremsleistung erhöht werden, um die Geschwindigkeit konstant zu halten. Die Stromerhöhung steht in direktem Zusammenhang mit dem ausgeübten Bremsmoment und kann somit qualitativ oder quantitativ überwacht werden.

Aus der Änderung der Leistungsaufnahme des Motors kann auf die Funktionsfähigkeit der Bremse geschlossen werden. Ändert sich nämlich die Leistungsaufnahme des Motors nicht, so ist dies ein klares Zeichen, dass die Bremse keine Wirkung auf die Spindel ausgeübt hat, d.h., dass die Bremse defekt ist.

Ändert sich die Leistungsaufnahme des Motors nur geringfügig bzw. nur bis zu einem vorgegebenen Referenzwert, so ist dies ein Zeichen dafür, dass die Bremse ihre Tätigkeit nur ungenügend erfüllt, d.h., dass beispielsweise die Spindel in der Bremse zwar verlangsamt aber immer noch dreht. Auch dies ist nicht wünschenswert. Erst wenn die Leistungsaufnahme des Motors über den Referenzwert hinausgeht, bedeutet dies, dass damit die Bremse funktionsfähig ist, dass sie nämlich auf die Spindel ein genügend grosses Bremsmoment ausgeübt hat.

Das erfindungsgemässe Verfahren wird bevorzugt bei jeder Betätigung der Spindel kurz nach Beginn der Betätigung durchgeführt, wodurch eine höchst mögliche Betriebssicherheit erzielt wird. Um was für eine Bremse es sich handelt, spielt dabei keine Rolle. Jede bekannte Bremse hat die beschriebene Auswirkung bei ihrer Betätigung auf die Leistungsaufnahme des Motors.

Bei dem Motor handelt es sich um einen Elektromotor und hier bevorzugt um einen Servomotor.

Bei der Vorrichtung zum Überwachen der Bremse handelt es sich um eine. zwischen Motor und Bremse eingeschaltete, eigenständige Überwachung, welche einen Anstieg der Leistungsaufnahme des Motors nach dem Betätigen der Bremse ermittelt und daraus die entsprechenden Signale zum Ansteuern des Motors und der Bremse ableitet. Die Überwachung kann auch durch die Steuereinheit des Motors selbst erfolgen.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
Figur 1 eine Draufsicht auf eine schematisch dargestellte Einrichtung zum Betätigen eines Pressenstössels mit einer erfindungsgemässen Vorrichtung zum Überwachen einer Bremse;
Figur 2 ein weiteres Ausführungsbeispiel einer erfindungsgemässen Einrichtung entsprechend Figur 1.

Eine Spindel 1, bevorzugt eine Kugelumlaufspindel, treibt einen Pressenstössel 2 an. Zum Betrieb ist die Spindel 1 über ein Kupplungsstück 3 mit einer Welle 4 eines Motors 5 verbunden. Bei diesem Motor 5 handelt es sich bevorzugt um einen Servomotor.

Der Spindel 1 ist eine Bremse 6 zugeordnet, die nur schematisch dargestellt ist. Bevorzugt handelt es sich bei dieser Bremse um eine mechanische Bremse, die durch ein entsprechendes Aggregat 7 betätigt werden kann. Beispielswiese kann das Aggregat 7 Strom zu entsprechenden Bremsbetätigungsorganen liefern, wobei die Bremse 6 frei ist, wenn Strom vorhanden ist, jedoch eine Bremsung erfolgt, sobald der Strom unterbrochen wird.

Das Aggregat 7 und der Motor 5 stehen mit einer Steuerung 8 in Verbindung.

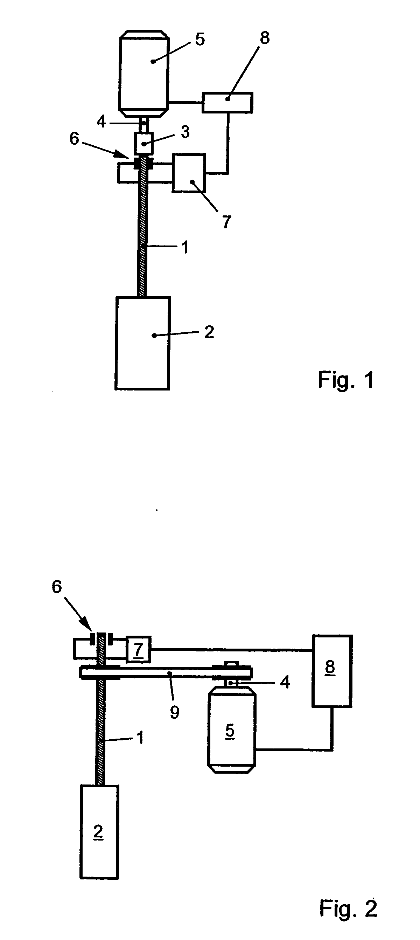

Die erfindungsgemässe Einrichtung gemäss Figur 2 unterscheidet sich von derjenigen nach Figur 1 im wesentlichen dadurch, dass der Motor 5 nicht direkt mit der Spindel 1 verbunden ist, sondern dass die Verbindung über einen Zahnriemen 9 erfolgt.

Die Funktionsweise der vorliegenden Erfindung ist folgende:

Wird der Motor 5 betätigt, so treibt er über seine Welle 4 und das Kupplungsstück 3 die Spindel 1 an, so dass der Pressenstössel 2 angehoben oder abgesenkt werden kann. Hierzu dreht die Spindel 1 beispielsweise in einer nicht näher gezeigten Gewindehülse in dem Pressenstössel 2.

Beispielsweise bei einem Not-Halt sollte die Spindel 1 sofort abgebremst werden, was zum einen über den Motor 5 oder eine entsprechende Elektronik, zum andern aber vor allem auch über die Bremse 6 erfolgt. Beispielsweise wird beim Not-Halt der von dem Aggregat 7 gelieferte Strom zu der Bremse 6 unterbrochen, so dass entsprechende Bremsbacken od. dgl. Bremselemente sofort schliessen.

Gemäss der vorliegenden Erfindung soll nun eine laufende Überprüfung der Funktionssicherheit der Bremse 6 erfolgen. Dies geschieht dadurch, dass kurz nach Ingangsetzen der Spindel 1, sei es bei einem Anfahren der Spindel, bei einem Indexieren oder auch während einem ganz normalen Arbeitszyklus, die Bremse 6 geschlossen wird, indem beispielsweise über die Steuerung 8 dem Aggregat 7 der Befehl zugeleitet wird, die Zufuhr an Strom zur Brems 6 zu unterbrechen.

Schliesst die Bremse, so weist der Motor 5 eine höhere Leistungsaufnahme auf. Diese erhöhte Leistungsaufnahme wird von der Steuerung 8 ermittelt. Beispielsweise bei Überschreiten eines vorgegebenen Referenzwertes kann so festgestellt werden, dass die Bremse 6 ordnungsgemäss funktioniert, d.h., ein genügend grosses Bremsmoment auf die Spindel 1 ausgeübt hat.

Ist der Unterschied zu der normalen Betriebsleistungsaufnahme des Motors unterhalb des Referenzwertes, so bedeutet dies, dass die Bremse 6 zwar einen bestimmten, jedoch ungenügenden Bremsvorgang eingeleitet hat. Erfolgt überhaupt keine Erhöhung der Leistungsaufnahme des Motors, so wird festgestellt, dass die Bremse überhaupt nicht betätigt wurde und damit ausgetauscht werden muss. In diesen beiden Fällen gibt die Steuerung den Befehl, dass der Motor 5 abgeschaltet und die Spindel 1 nicht mehr in Gang gesetzt werden kann, ohne dass eine Reparatur erfolgt ist.

Wie die Messung der Erhöhung der Leistungsaufnahme am Motor erfolgt, ist zweitrangig. Am einfachsten dürfte es sein, wenn die Erhöhung des Stroms oder die berechnete Leistung ermittelt wird.

### BEISPIEL:

### Zeitlicher Ablauf:

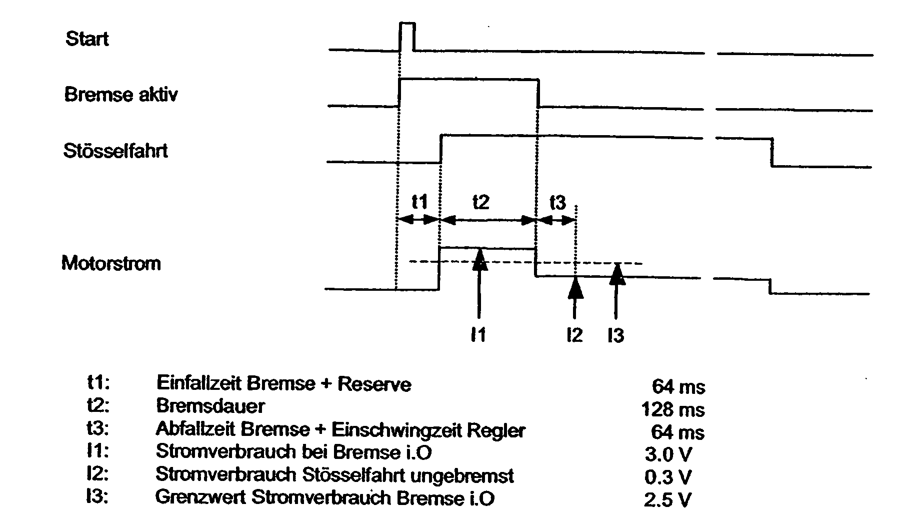

## Patentansprüche

1. Verfahren zum Überwachen einer Bremse (6) an einer Spindel (1), welche von einem Motor (5) angetrieben wird,
**dadurch gekennzeichnet,**
**dass** die Spindel (1) mittels des Motors (5) in Betrieb gesetzt und sodann die Bremse (6) betätigt und dabei eine Änderung der Leistungsaufnahme des Motors (5) ermittelt wird.

2. Verfahren nach Anspruch 1, **dadurch gekennzeichnet, dass** die Bremse (6) während oder kurz nach dem Inbetriebsetzen der Spindel (1) betätigt wird.

3. Verfahren nach Anspruch 1 oder 2, **dadurch gekennzeichnet, dass** aus der Differenz der Leistungsaufnahme des Motors (5) vor und während dem Bremsen auf die Funktionsfähigkeit der Bremse (6) geschlossen wird.

4. Vorrichtung zum Überwachen einer Bremse (6) an einer Spindel (1), welche von einem Motor (5) angetrieben wird, **dadurch gekennzeichnet, dass** zwischen Motor (5) und Bremse (6) eine Steuerung (8) zur Ermittlung eines Anstieges der Leistungsaufnahme des Motors (5) nach dem Betätigen der Bremse (6) vorgesehen ist.

5. Verwendung einer Vorrichtung gemäss Anspruch 4 an elektrisch angetriebenen Pressen mit Handbeschickung und/oder Handentnahme.
